# EUROPÄISCHE PATENTSCHRIFT

(11) **EP 1 889 347 B1**
(45) Veröffentlichungstag und Bekanntmachung des Hinweises auf die Patenterteilung: **03.10.2018**
(21) Anmeldenummer: 06724081.2
(22) Anmeldetag: 06.04.2006
(51) Int. Cl.: H02J 50/10, H02K 11/33, H02K 11/00

(54) **System zur induktiven Energieübertragung**
System for inductive power transfer
Système pour la transmission d'énergie sans fil

(30) Priorität: 10.05.2005 DE 102005022367
(43) Veröffentlichungstag der Anmeldung: 20.02.2008
(60) Teilanmeldung: 12002656.2
(73) Patentinhaber: SEW-EURODRIVE GmbH & Co. KG, 76646 Bruchsal (DE)
(72) Erfinder: SCHMIDT, Josef, 76676 Graben-Neudorf (DE)
(86) Internationale Anmeldenummer: PCT/EP2006/003136
(87) Internationale Veröffentlichungsnummer: WO 2006/119831

(56) Entgegenhaltungen:
- EP-A- 0 385 502
- WO-A-2005/020405
- US-A- 4 736 452
- US-A- 5 293 308
- US-A- 6 089 512
- US-B1- 6 310 291

## Beschreibung

Die Erfindung betrifft einen Verbraucher und ein System.
In industriellen Anlagen ist bekannt, elektrische Verbraucher, wie beispielsweise elektronische Geräte, Beleuchtungsvorrichtungen, Antriebe, Maschinen und dergleichen, aus einem Netz galvanisch zu versorgen, insbesondere mit Wechselstrom von 50 oder 60 Hz. Dazu sind die Verbraucher meist mittels kostspieliger Steckverbinder mechanisch angeschlossen und elektrisch verbunden. Außerdem weist eine solche Anlage oder Maschine meist für jeden Antrieb ein T-Stück als Energieabzweigung auf. Diese T-Stücke sind aufwendig zu installieren und kostspielig, besonderes wenn sie in hoher Schutzart für den Nassbereich oder gar den aseptischen Bereich einsetzbar sein müssen. Diese T-Stücke werden auch als Verteilerkästen bezeichnet und umfassen oft auch weitere Vorrichtungsteile, wie beispielsweise Notaus-Schalter. Somit sind sie aufwendig und kostspielig, insbesondere auch hinsichtlich der Installation.
Aus der DE 103 60 604 ist ein System und ein Verbraucher zur berührungslosen Versorgung bekannt.
Der Erfindung liegt daher die Aufgabe zugrunde, eine einfachere und kostengünstigere Verkabelung bei elektrischen Verbrauchern und Anlagen zu schaffen.

Erfindungsgemäß wird die Aufgabe durch ein Versorgungssystem mit den in Anspruch 1 angegebenen Merkmalen gelöst.

Wesentliche Merkmale der Erfindung bei dem Versorgungssystem sind, dass er Mittel zu seiner induktiven Versorgung umfasst,
wobei die Mittel ein Einschiebeteil umfassen, nach dessen Einschieben in den Verbraucher dessen Versorgung vorgesehen ist.

Somit ist eine schnelle Verbindung und Trennung mit dem versorgenden System möglich. Es müssen keine elektrischen freiliegenden Kontakte verwendet werden. Außerdem ist das Einschiebeteil aus Kunststoff kostengünstig herstellbar.

Von Vorteil ist dabei, dass der Verbraucher dicht und in hoher Schutzart in kostengünstiger Weise ausführbar ist. Die berührungslose Versorgung des Verbrauchers ermöglicht nämlich das Gehäuse einfach und schlicht, insbesondere ohne Unebenheiten oder Steckverbinder, auszuführen und somit ein Abfließen von Wasser zu ermöglichen sowie das Festsetzen von Feststoffen zu verhindern. Insbesondere ist er somit in Nassbereichen und aseptischen Bereichen einsetzbar. Die Zeit, welche für das Verkabeln notwendig ist, ist mit der Erfindung reduzierbar. Weiterhin werden Ableitströme, die bei konventioneller Steckerverkabelung auftreten, verhindert, so dass eine verbesserte elektromagnetische Verträglichkeit entsteht.

Weiter ist von Vorteil, dass die Einspeisung zu den Verbrauchern potentialfrei ist und die sonst in Anlagen vorhandene Potentialverschleppung sowie Funkentstörmittel bei Trennschaltern entfallen. Außerdem ist eine Blindleistungskompensation, insbesondere im Verbraucher, ermöglicht und somit weist der Wechselstrom kleinere Werte auf, weshalb dann auch kleinere Leitungsdurchmesser beim Primärleiter vorsehbar sind und somit geringere Verkabelungskosten erreichbar sind. Trennschalter sind entbehrlich, da ein Auftrennen durch ein Herausziehen des Primärleiters ersetzbar ist.

Bei einer vorteilhaften Ausgestaltung ist an das Einschiebeteil ein Schloss, umfassend Schlossbügel, formschlüssig verbindbar, wobei für das Lösen des Schlosses vom Einschiebeteil ein Schlüssel notwendig ist. Insbesondere ist eine Bohrung vorgesehen für den Schlossbügel des Schlosses. Vorteiligerweise ist nur ein beabsichtigtes und befugtes Lösen der Versorgung vom Verbraucher ausführbar.

Bei einer vorteilhaften Ausgestaltung ist das Einschiebeteil mit dem Verbraucher mit derartigen Mitteln verbindbar, dass unter die Verwendung eines Werkzeuges notwendig ist. Vorteiligerweise ist nur ein beabsichtigtes Lösen der Versorgung vom Verbraucher ausführbar.

Bei einer vorteilhaften Ausgestaltung weist der Verbraucher ein Gehäuseteil auf, das gehäusebildende Funktion für einen Elektromotor, ein Getriebe und einen den Elektromotor versorgende elektronische Schaltung, umfassen Frequenzumrichter, aufweist, wobei die Rotorwelle des Elektromotors und Abtriebswelle des Getriebes im Gehäuseteil gelagert sind und das Einschiebeteil in einen Aufnahmebereich des Gehäuseteils einschiebbar ist. Vorteiligerweise ist somit ein Gehäuseteil geformt, das mehrere Funktionen vereint, also Gehäuse ist für verschiedene Komponenten des Antriebs und Aufnahme für die Versorgung.

Bei einer vorteilhaften Ausgestaltung ist ein Primärleiter derart am Verbraucher vorgesehen, dass eine induktive Kopplung mit einer vom Verbraucher umfassten Sekundärwicklung vorsehbar ist. Von Vorteil ist dabei, dass kein Steckverbinder notwendig ist und somit die Verkabelung schnell und einfach ausführbar ist. Außerdem sind Kosten einsparbar. Da keine Kabelkonfektionierung notwendig ist, kann die Installation auch durch nicht elektrotechnisch geschultes Personal durchgeführt werden.

Bei einer vorteilhaften Ausgestaltung ist mindestens ein Primärleiter in einer Vertiefung oder einem Kabelkanal des Verbrauchers vorgesehen. Von Vorteil ist dabei, dass die Kabelverlegung sehr schnell und einfach ausführbar ist, nämlich durch bloßes Hineindrücken in die Vertiefung oder den Kabelkanal. Zusätzlich ist ein Vergießen mit einer Vergussmasse vorteilig ausführbar.

Bei einer vorteilhaften Ausgestaltung ist mindestens eine Sekundärwicklung um einen U-förmigen und/oder E-förmigen Kern gewickelt oder in einen sehr flach ausgeführten Empfängerkopf integriert. Von Vorteil ist dabei, dass je nach verwendetem Verfahren, gewünschter Leistung und gewünschtem Wirkungsgrad die Ausführung wählbar ist.

Bei einer vorteilhaften Ausgestaltung sind die Primärleiter mindestens teilweise vergossen und/oder mittels eines Deckels geschützt. Von Vorteil ist dabei, dass eine besonders hohe Schutzart erreichbar ist und keine verschmutzungsgefährdeten Hohlräume entstehen. Derartige in Deckel bzw. Halter vergossene Leiterstücke können an einer glatten Gehäuseoberfläche des Verbrauchers montiert werden, so dass keine Vertiefung bzw. kein Kanal am Verbraucher vorgesehen werden muss.

Bei einer vorteilhaften Ausgestaltung ist der Verbraucher dicht, an der äußeren Oberfläche glatt und/oder in hoher Schutzart ausgeführt. Von Vorteil ist dabei, dass der Verbraucher insbesondere zum Einsatz in Nassbereichen und/oder aseptischen Bereichen vorsehbar ist.

Bei einer vorteilhaften Ausgestaltung umfasst der Verbraucher keinen Steckverbinder oder andere elektrische Anschlussvorrichtungen an seinem Äußeren. Von Vorteil ist dabei wiederum, dass der Verbraucher in einfacher Weise dicht und in hoher Schutzart ausführbar ist.

Weitere Vorteile ergeben sich aus den Unteransprüchen.

### Bezugszeichenliste

1 Hinleiter des Primärleitersystems
2 Rückleiter des Primärleitersystems
3 Einschiebeteil
4 Umrichtergetriebemotor als Verbraucher
5 Erhebungen
6 Bohrung
7 Bohrung

Die Erfindung wird nun anhand von Abbildungen näher erläutert:

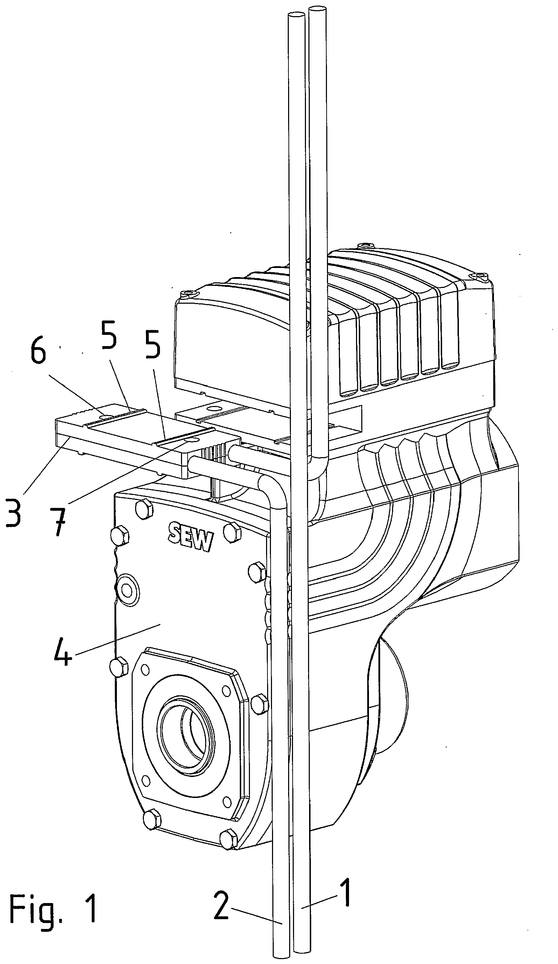

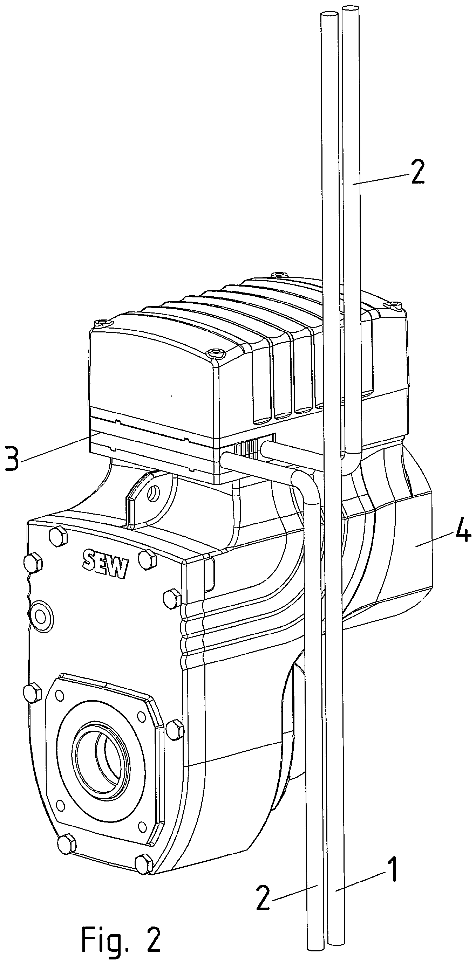

In der Figur 1 ist ein erfindungsgemäßer Verbraucher symbolisch gezeigt, wobei der Verbraucher von der Versorgung abgetrennt ist. In der Figur 2 ist ein erfindungsgemäßer Verbraucher symbolisch gezeigt mit Versorgung.

Das Primärleitersystem umfasst einen Hinleiter 1 und einen Rückleiter 2, in welche ein mittelfrequenter Wechselstrom eingeprägt wird.
Der als Umrichtergetriebemotor ausgeführte Verbraucher 4 umfasst eine Sekundärspule, die nach Einschieben des Einschiebeteils 3 induktiv gekoppelt ist an das Primärleitersystem.

Das Einschiebeteil 3 weist Erhebungen 5 zur formschlüssigen Verbindung mit dem Verbraucher 4 oder zumindest als Führung beim Einschieben des Einschiebeteils 3 auf. Bohrungen 6, 7 sind des Weiteren vorgesehen.

Mittels einer Schraube, die durch die Bohrung 6 steckbar ist und auch in einer Bohrung des Verbrauchers einbringbar ist, kann das Einschiebeteil 3 mit dem Verbraucher 4 formschlüssig gekoppelt werden. Dabei ist ein Werkzeug notwendig und das Lösen der Verbindung ist nur von Bedienern mit Werkzeug ausführbar.

In der Bohrung 7 ist bei aus dem Verbraucher herausgenommenem Einschiebeteil 3 ein Vorhängeschloss mit seinem Schlossbügel einhängbar. Auf diese Weise ist das WiederEinschieben des Einschiebeteils in den Verbraucher blockierbar.

Somit kann nur ein befugter Bediener mit Schlüssel für das Schloss des Vorhängeschlosses die elektrische Versorgung des Verbrauchers wiederherstellen.

Der Verbraucher weist einen U-Kern oder einen E-förmigen Kern auf, der die Sekundärspule an das Primeleitersystem verbessert ankoppelt.

## Patentansprüche

1. Versorgungssystem mit Einschiebeteil (3) zur induktiven Versorgung eines Verbrauchers (4),
**dadurch gekennzeichnet, dass**
das Versorgungssystem Mittel zur induktiven Versorgung des Verbrauchers aufweist, wobei die Mittel ein Einschiebeteil umfassen, nach dessen Einschieben in den Verbraucher für dessen Versorgung vorgesehen ist, wozu der Verbraucher eine Sekundärwicklung aufweist und das Einschiebeteil einen Primärleiter,
wobei das Einschiebeteil Erhebungen (5) zur Führung beim Einschieben des Einschiebeteils in den Verbraucher aufweist,
wobei das Einschiebeteil eine Bohrung (6) aufweist, in welche ein Schlossbügel eines Schlosses formschlüssig verbindbar und einhängbar ist, so dass ein Einschieben des Schlosses blockiert ist,
wobei für das Lösen des Schlosses vom Einschiebeteil ein Schlüssel notwendig ist,

2. Versorgungssystem nach mindestens einem der vorangegangenen Ansprüche,
**dadurch gekennzeichnet, dass**
das Einschiebeteil formschlüssig oder mit Klemmverbindung mit dem Verbraucher verbindbar ist.

3. Versorgungssystem nach mindestens einem der vorangegangenen Ansprüche,
**dadurch gekennzeichnet, dass**
das Einschiebeteil mit dem Verbraucher mit derartigen Mitteln verbindbar ist, dass unter die Verwendung eines Werkzeuges notwendig ist.

4. Versorgungssystem nach mindestens einem der vorangegangenen Ansprüche,
**dadurch gekennzeichnet, dass**
der Verbraucher ein Gehäuseteil aufweist, das gehäusebildende Funktion für einen Elektromotor, ein Getriebe und einen den Elektromotor versorgende elektronische Schaltung, umfassen Frequenzumrichter, aufweist, wobei die Rotorwelle des Elektromotors und Abtriebswelle des Getriebes im Gehäuseteil gelagert sind und das Einschiebeteil in einen Aufnahmebereich des Gehäuseteils einschiebbar ist.

5. Versorgungssystem nach mindestens einem der vorangegangenen Ansprüche,
**dadurch gekennzeichnet, dass**
die Mittel eine elektronische Schaltung zur Versorgung von Teilen des Verbrauchers umfassen.

6. Versorgungssystem nach mindestens einem der vorangegangenen Ansprüche,
**dadurch gekennzeichnet, dass**
der Verbraucher ein Antrieb ist, der zumindest einen Elektromotor und eine elektronische Schaltung zur Versorgung des Elektromotors umfasst.

7. Versorgungssystem nach mindestens einem der vorangegangenen Ansprüche,
**dadurch gekennzeichnet, dass**
ein Primärleiter derart am Verbraucher vorgesehen ist, dass eine induktive Kopplung mit einer vom Verbraucher umfassten Sekundärwicklung vorsehbar ist.

8. Versorgungssystem nach mindestens einem der vorangegangenen Ansprüche,
**dadurch gekennzeichnet, dass**
mindestens ein Primärleiter in einer Vertiefung oder einem Kabelkanal des Verbrauchers vorgesehen ist.

9. Versorgungssystem nach mindestens einem der vorangegangenen Ansprüche,
**dadurch gekennzeichnet, dass**
mindestens eine Sekundärwicklung um einen U-förmigen und/oder E-förmigen Kern oder in einem flachen Kern gewickelt ist.

10. Versorgungssystem nach mindestens einem der vorangegangenen Ansprüche,
**dadurch gekennzeichnet, dass**
der Verbraucher dicht, an der äußeren Oberfläche glatt und/oder in hoher Schutzart ausgeführt ist, insbesondere zum Einsatz in Nassbereichen und/oder aseptischen Bereichen.

11. Versorgungssystem nach mindestens einem der vorangegangenen Ansprüche,
**dadurch gekennzeichnet, dass**
der Verbraucher keinen Steckverbinder oder andere elektrische Anschlussvorrichtungen an seinem Äußeren umfasst.

12. Versorgungssystem nach mindestens einem der vorangegangenen Ansprüche,
**dadurch gekennzeichnet, dass**
der Verbraucher derart gestaltet ist, dass Information durch Aufmodulation von höherfrequenten Signalen auf den Primärleiter übertragbar ist.

13. Versorgungssystem nach mindestens einem der vorangegangenen Ansprüche,
**dadurch gekennzeichnet, dass**
der Primärleiter aus einem AC/AC-Wandler, also Wechselstrom-Wechselstrom-Wandler, versorgt ist.

14. Versorgungssystem nach mindestens einem der vorangegangenen Ansprüche,
**dadurch gekennzeichnet, dass**
der AC/AC-Wandler aus dem elektrischen Netz, insbesondere mit 50 oder 60 Hz, versorgt ist.

15. Versorgungssystem nach mindestens einem der vorangegangenen Ansprüche,
**dadurch gekennzeichnet, dass**
mindestens ein Primärleiter kraftschlüssig oder formschlüssig im Verbraucher gehalten ist.

16. Versorgungssystem nach mindestens einem der vorangegangenen Ansprüche,
**dadurch gekennzeichnet, dass**
der Primärleiter mit mittelfrequentem Wechselstrom beaufschlagt ist.

17. Versorgungssystem nach mindestens einem der vorangegangenen Ansprüche,
**dadurch gekennzeichnet, dass**
der Primärleiter mit mittelfrequentem Wechselstrom von etwa 10 bis 50 kHz, insbesondere von etwa 20 kHz, beaufschlagt ist.

## Claims

1. Power supply system comprising an insertion part (3) for inductively supplying power to a load (4),
**characterized in that**
the power supply system has means for inductively supplying power to the load,
wherein the means comprise an insertion part, the power supply to the load being provided after said insertion part has been inserted into the load, for which purpose the load has a secondary winding and the insertion part has a primary conductor,
wherein the insertion part has raised areas (5) for guidance purposes during the insertion of the insertion part into the load,
wherein the insertion part has a bore (6), in which a lock shackle of a lock can be connected and suspended with a form fit so that insertion of the lock is blocked,
wherein a key is required in order to release the lock from the insertion part.

2. Power supply system according to at least one of the preceding claims,
**characterized in that**
the insertion part can be connected to the load with a form fit or by a clamping connection.

3. Power supply system according to at least one of the preceding claims,
**characterized in that**
the insertion part can be connected to the load using such means that the use of a tool is required.

4. Power supply system according to at least one of the preceding claims,
**characterized in that**
the load has a housing part which has the function of forming a housing for an electric motor, a transmission and an electronic circuit which supplies power to the electric motor, comprise frequency converters, wherein the rotor shaft of the electric motor and the output shaft of the transmission are mounted in the housing part, and the insertion part can be inserted into a receiving area of the housing part.

5. Power supply system according to at least one of the preceding claims,
**characterized in that**
the means comprise an electronic circuit for supplying power to parts of the load.

6. Power supply system according to at least one of the preceding claims,
**characterized in that**
the load is a drive which comprises at least an electric motor and an electronic circuit for supplying power to the electric motor.

7. Power supply system according to at least one of the preceding claims,
**characterized in that**
a primary conductor is provided on the load in such a way that an inductive coupling to a secondary winding comprised by the load can be provided.

8. Power supply system according to at least one of the preceding claims,
**characterized in that**
at least one primary conductor is provided in a depression or cable duct of the load.

9. Power supply system according to at least one of the preceding claims,
**characterized in that**
at least one secondary winding is wound around a U-shaped and/or E-shaped core or in a flat core.

10. Power supply system according to at least one of the preceding claims,
**characterized in that**
the load is sealed, is smooth on the outer surface and/or has a high protection rating, in particular for use in wet areas and/or aseptic areas.

11. Power supply system according to at least one of the preceding claims,
**characterized in that**
the load comprises no plug-in connectors or other electrical connection devices on its exterior.

12. Power supply system according to at least one of the preceding claims,
**characterized in that**
the load is configured such that information can be transmitted by modulating higher-frequency signals onto the primary conductor.

13. Power supply system according to at least one of the preceding claims,
**characterized in that**
the primary conductor is supplied with power from an AC/AC converter, that is to say an alternating current/alternating current converter.

14. Power supply system according to at least one of the preceding claims,
**characterized in that**
the AC/AC converter is supplied with power from the electrical grid, in particular at 50 or 60 Hz.

15. Power supply system according to at least one of the preceding claims,
**characterized in that**
at least one primary conductor is held in the load with a force fit or with a form fit.

16. Power supply system according to at least one of the preceding claims,
**characterized in that**
medium-frequency alternating current is applied to the primary conductor.

17. Power supply system according to at least one of the preceding claims,
**characterized in that**
medium-frequency alternating current of around 10 to 50 kHz, in particular around 20 kHz, is applied to the primary conductor.

## Revendications

1. Système d'alimentation avec partie enfichable (3) pour l'alimentation par induction d'un consommateur (4),
**caractérisé en ce**
**que** le système d'alimentation comprend des moyens pour l'alimentation par induction du consommateur, les moyens comprenant une partie enfichable, après l'insertion de laquelle dans le consommateur l'alimentation de celui-ci est prévue, le consommateur présentant à cet effet un enroulement secondaire et la partie enfichable un conducteur primaire,
dans lequel la partie enfichable présente des surélévations (5) pour le guidage lors de l'insertion de la partie enfichable dans le consommateur,
dans lequel la partie enfichable présente un alésage (6) dans lequel une anse de cadenas d'un cadenas peut être reliée par complémentarité de forme et accrochée de telle sorte qu'une insertion du cadenas soit bloquée,
dans lequel une clé est nécessaire pour libérer le cadenas de la partie enfichable.

2. Système d'alimentation selon au moins l'une des revendications précédentes,
**caractérisé en ce**
**que** la partie enfichable peut être reliée au consommateur par complémentarité de forme ou par serrage.

3. Système d'alimentation selon au moins l'une des revendications précédentes,
**caractérisé en ce**
**que** la partie enfichable peut être reliée au consommateur par des moyens tels qu'il est nécessaire d'utiliser un outil.

4. Système d'alimentation selon au moins l'une des revendications précédentes,
**caractérisé en ce**
**que** le consommateur présente une partie boîtier qui a une fonction de boîtier pour un moteur électrique, un réducteur et un circuit électronique alimentant le moteur électrique, comprenant un variateur de fréquence, l'arbre de rotor du moteur électrique et l'arbre de sortie du réducteur étant montés dans la partie boîtier et la partie enfichable pouvant être insérée dans une zone de réception de la partie boîtier.

5. Système d'alimentation selon au moins l'une des revendications précédentes,
**caractérisé en ce**
**que** les moyens comprennent un circuit électronique pour alimenter des parties du consommateur.

6. Système d'alimentation selon au moins l'une des revendications précédentes,
**caractérisé en ce**
**que** le consommateur est un dispositif d'entraînement qui comprend au moins un moteur électrique et un circuit électronique pour alimenter le moteur électrique.

7. Système d'alimentation selon au moins l'une des revendications précédentes,
**caractérisé en ce**
**qu'**un conducteur primaire est prévu sur le consommateur de telle sorte qu'un couplage inductif avec un enroulement secondaire compris par le consommateur peut être prévu.

8. Système d'alimentation selon au moins l'une des revendications précédentes,
**caractérisé en ce**
**qu'**au moins un conducteur primaire est prévu dans un évidement ou un conduit de câbles du consommateur.

9. Système d'alimentation selon au moins l'une des revendications précédentes,
**caractérisé en ce**
**qu'**au moins un enroulement secondaire est enroulé autour d'un noyau en U et/ou en E ou dans un noyau plat.

10. Système d'alimentation selon au moins l'une des revendications précédentes,
**caractérisé en ce**
**que** le consommateur est étanche, lisse sur sa surface extérieure et/ou conçu avec un degré de protection élevé, en particulier pour une utilisation dans des zones humides et/ou aseptiques.

11. Système d'alimentation selon au moins l'une des revendications précédentes,
**caractérisé en ce**
**que** le consommateur ne comprend pas de connecteur ou d'autres dispositifs de raccordement électrique à l'extérieur du consommateur.

12. Système d'alimentation selon au moins l'une des revendications précédentes,
**caractérisé en ce**
**que** le consommateur est conçu de telle sorte que des informations peuvent être transmises par modulation de signaux à haute fréquence sur le conducteur primaire.

13. Système d'alimentation selon au moins l'une des revendications précédentes,
**caractérisé en ce**
**que** le conducteur primaire est alimenté par un convertisseur AC/AC, c'est-à-dire un convertisseur alternatif-alternatif.

14. Système d'alimentation selon au moins l'une des revendications précédentes,
**caractérisé en ce**
**que** le convertisseur AC/AC est alimenté par le réseau électrique, en particulier à 50 ou 60 Hz.

15. Système d'alimentation selon au moins l'une des revendications précédentes,
**caractérisé en ce**
**qu'**au moins un conducteur primaire est maintenu dans le consommateur à force ou par complémentarité de forme.

16. Système d'alimentation selon au moins l'une des revendications précédentes,
**caractérisé en ce**
**que** le conducteur primaire est soumis à un courant alternatif à moyenne fréquence.

17. Système d'alimentation selon au moins l'une des revendications précédentes,
**caractérisé en ce**
**que** le conducteur primaire est soumis à un courant alternatif à moyenne fréquence d'environ 10 à 50 kHz, en particulier d'environ 20 kHz.
